# EUROPEAN PATENT APPLICATION

(11) **EP 2 587 170 A2**
(43) Date of publication of application: **01.05.2013**
(21) Application number: 12184797.4
(22) Date of filing: 18.09.2012
(51) Int. Cl.: F24D 19/00, F17D 5/06, F16L 9/02, F16L 9/12, F16L 59/14

(54) **Method and system for determing the extent of deterioration in a pipe network of a heating system**

(30) Priority: 31.10.2011 NL 2007684
(71) Applicant: Holding Investments en Management (H.I.M.) B.V., 4817 AN Breda (NL)
(72) Inventor: Nijboer, Johannes Wilhelmus, 4731 NX Oudenbosch (NL); Kastelijns, Bernardus Adrianus Karel, 4901 ZG Oosterhout (NL); Embregts, Petrus Johannes Cornelis, 4817 NA Breda (NL)
(74) Representative: van Oeffelt, Abraham

(57) **Abstract**

The invention relates to determining the extent of deterioration of the pipe network of a heating system, wherein the heating system comprises a pipe network constructed from conduits comprising an electrically conductive, medium-carrying pipe for guiding liquid, which medium-carrying pipe is enclosed by an insulating material in which at least one electrical conductor is received, and the invention comprises of determining at least one value from the group of a dielectric absorption ratio, a dielectric discharge, a polarization index between the electrically conductive, medium-carrying pipe and the at least one electrical conductor. The invention further relates to a system for performing the method.

## Description

The present invention relates to a method and system for determining the extent of deterioration in a pipe network of a heating system, and to a method and definition for performing (preventive) maintenance. The invention also relates to a method for determining the extent of deterioration in the pipe network of a heating system.

Heating systems generally comprise closed pipe networks from a hot water supply, via distribution points in local districts, to houses and vice versa. The central hot water supply makes it possible for heating of the water to take place in energy-efficient manner and for use to be made of existing heat energy sources (residual heat). During passage of the water through the pipe system the water relinquishes its heat to heat exchanging elements accommodated in the distribution stations. The returned and cooled water can once again be heated in the hot water supply and carried through the pipe network.

Because both the temperature of the hot water (via the feed and return conduits) and the outside temperature can fluctuate, the pipe network is continuously subject to expansion and contraction. This inherently causes mechanical stresses in the conduits which can bring about deterioration of the pipe network. In addition, there may be various other causes of deterioration.

It is logically desirable to avoid breakages and leakages in the system and to prevent (hot) water escaping from the system. This is desirable not only because of the enormous loss of heat, but also from a financial, social and environmental viewpoint. It is also desirable to have maintenance performed preventively, and not just when a defect occurs. In addition, a defect in the heating conduit will develop and take on more serious proportions, and remedying thereof will therefore require larger investment. It is therefore important to identify the occurrence of defects and remedy them as quickly as possible.

It is usual for this purpose to provide a heating system comprising a pipe network constructed from conduits which comprise an electrically conductive, medium-carrying pipe for guiding liquid, which medium-carrying pipe is enclosed by an insulating material in which at least one electrical conductor is received. The conduits usually also comprise a second electrical conductor, likewise received in the insulating material, and the medium-carrying pipe is also provided with an outer pipe which surrounds the insulation, is generally made from plastic and which is not electrically conductive.

During laying of a pipe network lengths of piping are connected to each other. Use is made here of welded connections and/or coupling sleeves for the medium-carrying and/or outer pipes. The electrical conductors of mutually adjacent medium-carrying pipes are also connected to each other. These electrical conductors are usually copper wires which are not provided with an insulating sheath and which are arranged in the insulation of the pipe. Once a pipe network has been completed, it is possible to determine by means of resistance measurements whether the electrical conductors of adjacent pieces of piping are correctly connected to each other. An ohmic resistance of one copper loop arranged in a closed pipe network can be measured on the basis of the known length and diameter. If this resistance is too high, a breakage may then have occurred, and if it is too low there is then unintentional contact. The resistance between a plurality of electrical conductors, or electrical conductors and the medium-carrying or outer pipe or ground can also be measured. Because the electrical conductors and the medium-carrying and outer pipes are separated by means of insulation, it can be anticipated and there is a very high electrical resistance therebetween. If this is not the case, the insulation is then possibly affected, which can for instance point to a medium-carrying leakage or an incipient leakage in the outer pipe.

The above mentioned techniques are known and can be applied not only during the construction of a pipe network for a heating system, but also for the purpose of regular inspections thereof.

Although the above described known techniques provide the option of diagnosing determined faults, their application involves limitations which are perceived as disadvantageous. They particularly provide little opportunity for preventive maintenance, but specifically provide an indication of a defect which has already occurred.

It is an object of the present invention to provide a method and a system which at least partially obviates the drawbacks of the prior art. It is a further object of the present invention to provide a method and system which makes it possible to perform targeted preventive maintenance. It is a further object of the present invention to provide the above stated advantages while making use of already constructed pipe networks for heating systems as well as for new networks yet to be constructed.

The invention provides for this purpose a method for determining the extent of deterioration of the pipe network of a heating system, wherein the heating system comprises a pipe network constructed from conduits comprising an electrically conductive, medium-carrying pipe for guiding liquid, which inner pipe is enclosed by an insulating material in which at least one electrical conductor is received, and wherein the method comprises of determining at least one value from the group of a dielectric absorption ratio (DAR) and a dielectric discharge (DD).

In contrast to the usual resistance measurements as described in the introduction, determining the DAR or DD value relates to performing a series of successive measurements or a measurement with a time duration such that quantities occurring under the influence of the measuring voltage or current and varying over time can be detected. These quantities, which relate to the capacitive and/or transient electrical properties and/or phenomena in the pipe network, have been found to be indicative of incipient defects, whereby the method according to the invention provides the option of performing preventive maintenance in targeted manner.

The above described method is preferably applied in combination with determining at least one value from the group of an electrical resistance of at least a part of the at least one electrical conductor, an electrical resistance between the at least one electrical conductor and a second further electrical conductor, the electrical resistance between at least one electrical conductor and the electrically conductive, medium-carrying pipe. These measurements are known but in determined cases (such as a combination of a breakage and a short-circuit) give an incomplete or incorrect picture of the status of the pipe network. Together with the DAR or DD measurement, a particularly great reliability is obtained.

Once an irregularity has been detected, further measurements can take place in order to determine the nature and also the precise location of the defect. Additional measurements can be measurements of decrease in pressure, flow rate and temperature or - when measuring equipment is placed for this purpose - measurements of difference in temperature between the medium-carrying pipe and outer pipe or differences in temperature between the water and earth surrounding the conduit. A relatively short lag between the temperature outside the pipe and a temperature of the water carried by the pipe can be a particular indication here of a leakage.

In a subsequent embodiment the method according to the invention comprises of indexing the at least one determined value and providing a reference value or reference interval against which the index can be verified.

Indexing comprises of reducing a number of measured electrical quantities to one numerical value. Such a numerical value or index makes it possible to decide quickly and easily whether a measured (part of a) pipe network requires maintenance. The numerical value can for instance be calculated by taking the average or the sum of a product of a number of measured values as described above.

In a preferred embodiment a measuring device for measuring the electrical quantities, and in particular the DAR or DD measurement, is adapted to perform a calculation of the index on the basis of a predetermined algorithm. In such a case a person responsible for performing the measurements need only determine whether or not the index has an acceptable value. This has the advantage that there is a reduced chance of an inaccurate assessment and the person need not perform any complicated calculations.

The DD measurement is performed by defining the pipe and a ground together as negative pole and the at least one or more electrical conductors as combined positive pole. Using the current I through the insulation, the voltage U between the positive and negative poles and the capacitance between the conductors and the pipe, the DD value is defined as follows:
DDₙ = I (mA)/U(V)*C(uF)

This measurement is performed a number of n times, wherein the voltage is varied. The insulation quality Q is then determined by:
Q = DD₁/DD₂
Wherein DD₁ and DD₂ are in this case the first and second measured values for for DDₙ. Different ratios are expected at different voltages. A doubling of the voltage can for instance result in a Q-value that is one and a half times greater.

The measurements for different voltages are subsequently repeated at some time interval. When Q here remains the same or even increases the conduit is reliable, and when the value decreases maintenance is necessary.

Determining whether or not an index has an acceptable value takes place on the basis of experience with deterioration and the seriousness associated therewith, and predictive value in respect of defects. According to the present invention it is recommended to determine these values on the basis of statistics and previously performed measurements. For this purpose the method comprises of recording measured values in a database, comparing the index to corresponding reference values or reference intervals determined for previously replaced conduits of heating systems and determining or adjusting the reference values or the reference intervals on the basis of the comparison and a predetermined acceptable risk.

When a determined value differs by more than a predetermined quantity from the index or falls outside the reference interval, at least a part of a pipe network of a heating system can be preventively replaced.

An example of usable intervals and their classifications are:

| | |
|---|---|
| 2.0<Q<1.9 | Very good |
| 1.9 < Q < 1.87 | Good |
| 1.87<Q<1.65 | Mediocre |
| 1.65 < Q < 1.5 | Poor |

The invention will now be elucidated with reference to the following figures, in which:
- Figure 1 shows a schematic overview of a heating system;
- Figure 2 shows a section of a pipe used in the system of figure 1;
- Figure 3 shows a graph of Q values for pipes with a different qualification over time; and
- Figure 4 shows a decision diagram for determining whether maintenance is necessary.

The following references are used in the figures:
- 101:: DD value
- 102:: very good
- 103:: good
- 104:: semi-stable
- 105:: poor/unstable
- 106:: time
- 107:: DD shape
- 108:: DD shape (1) + I_{Q} (2)
- 109:: I_{Q}: <2.0-1.9>
- 110:: I_{Q}: <1.9-1.87>
- 111:: I_{Q}: <1.87-1.65>
- 112:: I_{Q}: <1.65-1.5>

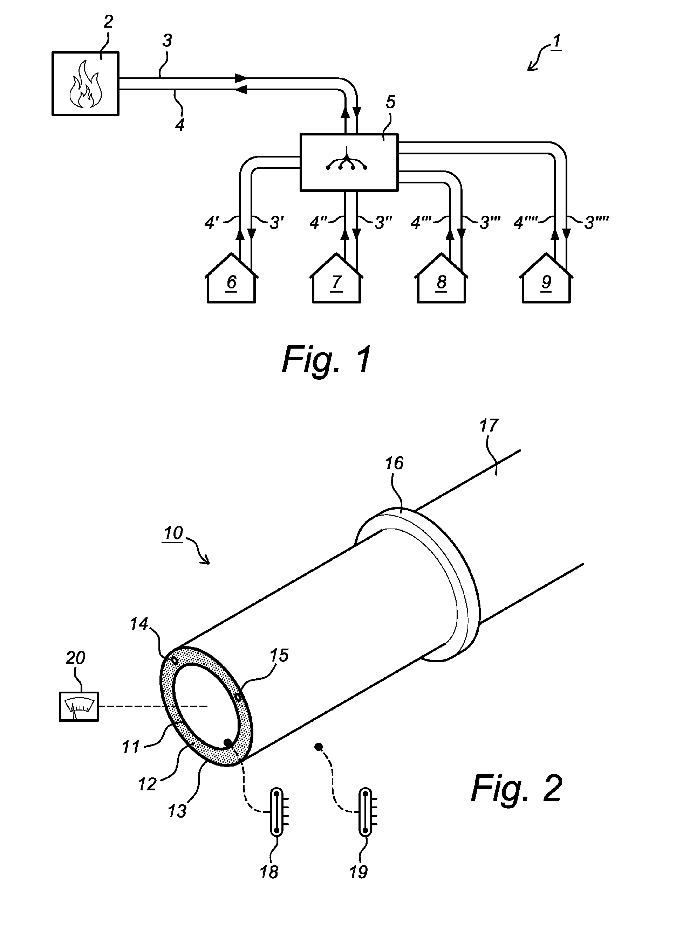

Figure 1 shows a schematic overview of a heating system 1. The system comprises a pipe network comprising supply conduits 3, 3', 3'', 3''', 3'''' for hot water heated by a heating installation 2, and return conduits 4, 4', 4", 4''', 4"" for feedback of water which has generated its heat in houses 6, 7, 8 and 9 of a city with heat supply. A distribution station 5 is present in the city to enable different homes to be provided with heating water.

Figure 2 shows a section of a conduit 10 from which the pipes 3, 3', 3", 3''', 3"" and 4, 5 4', 4", 4''', 4'''' are constructed. Conduit 10 comprises a medium-carrying pipe 11 around which an insulation 12 is arranged and with an outer pipe 13 therearound. A first and second electrical conductor 14, 15 are arranged in the insulation. Conduit 10 is connected by means of a sleeve 16 to a similar outer pipe 17. According to the present invention electrical quantities can be measured between the medium-carrying pipe 11, outer pipe 13 and electrical conductors 14, 15, as well as additional measurements such as flow rate and flow measurements in the pipe by means of measuring equipment 20, and temperatures respectively inside and outside the conduit by means of temperature gauges 18, 19.

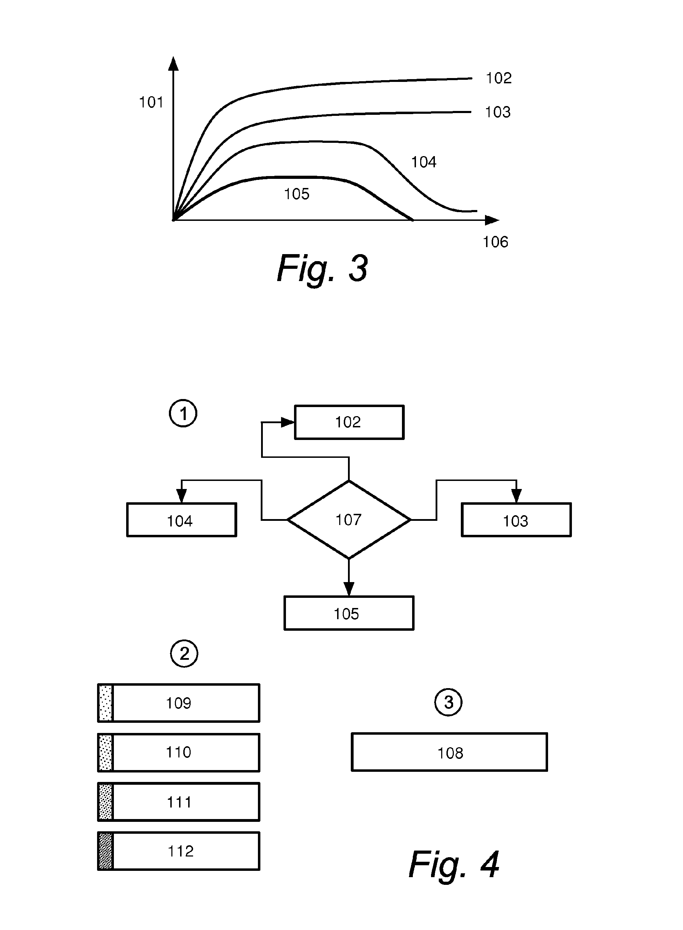

Figure 3 shows a graph with DD values for pipes with a different qualification over time.

Figure 4 shows a decision diagram for determining whether maintenance is necessary. In the diagram the necessity of maintenance is determined on the basis of both the absolute value of Q and the shape of the graph.

## Claims

1. Method for determining the extent of deterioration of the pipe network of a heating system, wherein:
- the heating system comprises a pipe network constructed from conduits comprising an electrically conductive, medium-carrying pipe for guiding liquid, which medium-carrying pipe is enclosed by an insulating material in which at least one electrical conductor is received;
the method comprising of:
- determining at least one value from the group of a dielectric absorption ratio, a dielectric discharge, a polarization index between the electrically conductive, medium-carrying pipe and the at least one electrical conductor.

2. Method as claimed in claim 1, comprising of determining at least one value from the group of an electrical resistance of at least a part of the at least one electrical conductor, an electrical resistance between the at least one electrical conductor and a second further electrical conductor, the electrical resistance between at least one electrical conductor and the electrically conductive, medium-carrying pipe.

3. Method as claimed in claim 1 or 2, comprising of indexing the at least one determined value and providing a reference value or reference interval against which the index can be verified.

4. Method as claimed in any of the foregoing claims, comprising of recording measured values in a database, comparing the index to corresponding indices determined for replaced conduits of heating systems and determining or adjusting the reference value or the reference interval on the basis of the comparison and a predetermined acceptable risk.

5. Method as claimed in claim 3 or 4, comprising of preventively replacing at least a part of a pipe network of a heating system when the determined value differs by more than a predetermined quantity from the index or falls outside the reference interval.

6. System for determining the extent of deterioration of a pipe network of a heating system, comprising:
- a measuring device for determining at least one value from the group of a dielectric absorption ratio, a dielectric discharge, a polarization index between the electrically conductive, medium-carrying pipe and the at least one electrical conductor in a heating system comprising a pipe network constructed from conduits comprising an electrically conductive, medium-carrying pipe for guiding liquid, which medium-carrying pipe is enclosed by an insulating material in which at least one electrical conductor is received;
- a database for storing the determined values and adapted to index the at least one determined value and to provide a reference value or reference interval against which the index can be verified.
